# EUROPEAN PATENT APPLICATION

(11) **EP 2 189 688 A1**
(43) Date of publication of application: **26.05.2010**
(21) Application number: 09175975.3
(22) Date of filing: 13.11.2009
(51) Int. Cl.: F16J 15/26, F16J 15/44, H02K 5/124

(54) **Shaft sealing system, preferably for a hydrogen cooled generator**

(30) Priority: 24.11.2008 US 276554
(71) Applicant: Alstom Technology Ltd, 5400 Baden (CH)
(72) Inventor: Schubert, Johann, Ch-5506, Mägenwil (CH)

(57) **Abstract**

Generator shaft sealing arrangement comprising at least two seal rings (2, 3) with a sealing oil channel (8) between, wherein the seal rings (2, 3) are radially enclosing a rotating shaft (1) with a clearance (6, 7), and wherein sealing oil (34) is pumped through the sealing oil channel (8) in a radial direction towards the shaft (1) and is subsequently flowing through said clearance (6, 7) in two opposite axial directions and is collected on an first side (4) as well as on a second side (5) of the shaft sealing arrangement and at least partially reintroduced into the sealing oil supply system. The generator shaft sealing arrangement shows a very low hydrogen consumption and a high hydrogen purity for a hydrogen cooled turbo generator thereby minimising oil degassing expense in that on at least one side (4, 5) the corresponding seal ring (2, 3) is provided with a sealing oil return channel (37, 38), through which at least a fraction of the sealing oil flowing in the corresponding clearance (6, 7) exits said clearance (6, 7) in a radial direction, and is at least partially collected and reintroduced into the sealing oil supply system (16, 18).

## Description

### TECHNICAL FIELD

The present invention relates to the field of shaft sealing systems, preferably to generator shaft sealing arrangements. It specifically relates to such sealing arrangements which are based on sealing oil supply as they are used for example for hydrogen cooled turbo generators. It furthermore relates to uses of such sealing arrangements and methods for operating such sealing arrangements.

### BACKGROUND OF THE INVENTION

In hydrogen cooled turbine generators the rotor shaft ends must be sealed by a gas side enclosure to prevent escape of the dangerous hydrogen gas along the shaft. To this end seal rings which are supplied with oil under pressure are used. Oil is pumped to a feed groove or sealing oil channel between the annular seal rings. When the oil pressure in the feed groove exceeds the gas pressure in the turbine generator, some oil is forced both ways in opposite directions along the shaft through the small clearance space between the seal rings and the shaft thus preventing escape of hydrogen gas from the turbine generator by means of a sealing film. The seal rings function to restrict the flow of oil through the sealing clearance. Typically these rings can move radially with the shaft but are restrained from rotating. The system supplying oil to the seal rings must maintain the oil pressure at some value above the hydrogen gas pressure in the turbine generator. For reasons of safety it is typically also necessary to provide redundant means for supplying oil to the seal rings because loss of oil to them may cause extensive hydrogen leakage from the generator and damage not only to the seal rings and the shaft, but also be dangerous due to the explosive hydrogen gas leaving the generator space.

Sealing systems of this type are well-known in the state of the art and one of these systems is for example disclosed in US 2,159,057 and another one, a so-called single circuit system, is disclosed in US 4,058,320. More recent developments in this respect are, for example, described in WO 2006/127088.

### SUMMARY OF THE INVENTION

The object of the present invention is therefore to provide an improved sealing arrangement which makes use of sealing oil which is located in the clearance between the shaft and seal rings.

Specifically, a generator shaft sealing arrangement is to be improved comprising at least two seal rings with a sealing oil channel between (essentially being given by the axial clearance between the two seal rings), wherein the seal rings are radially enclosing a rotating shaft with a clearance (it however being possible that the seal rings as such are not circumferential but are given as a series of part rings, for example four, each of them covering one quadrant). Sealing oil is pumped through the sealing oil channel in a radial direction towards the shaft and is subsequently flowing through said clearance in two opposite axial directions (one to the outside and one to the generator interior) and is collected on a first side as well as on a second side of the shaft sealing arrangement and at least partially reintroduced into the sealing oil supply system.

According to the invention on at least one side the corresponding seal ring is provided with a sealing oil return channel, through which at least a fraction of the sealing oil flowing in the corresponding clearance exits said clearance in a radial direction, and is at least partially collected and reintroduced into the sealing oil supply system.

According to any of the previously known sealing systems of this kind the sealing oil is always only pumped into the clearance towards the shaft. In case of a single circuit sealing system there is one single channel through which the sealing oil is pressed towards the shaft. In case of a double circuit sealing system there are provided two channels, which are axially distanced and through both of which sealing oil is pressed towards the shaft. In case of a triple circuit sealing system, three channels which are axially distanced are provided in the seal rings and through all of them sealing oil is pressed towards the shaft. Any sealing oil collected in any of these systems is however only collected completely on the air side and/or on the gas side of the sealing arrangement.

The present invention is in contrast to these systems in that within the seal rings, and before the sealing oil exits the clearance towards the air side or the gas side, a fraction, preferably a substantial fraction of the sealing oil flowing in the clearance is already collected and reintroduced into the supply system. Only a small fraction travels through the terminal parts of the clearance and actually enters the air side and/or the gas side and is collected optionally there as well for reintroduction into the supply system.

Such a system is not only simpler than complicated systems like a triple circuit system and it is also characterised by a low hydrogen consumption and high hydrogen purity, and degassing expenses for degassing the sealing oil can be minimised. Picking up the oil within the clearance of the gas side ring before leaving it and adjusting the pressure difference between the pickup point and the hydrogen pressure in the generator if adjusted to be as low as possible makes all this possible and highly efficient. Doing the same with the clearance of the air side ring both, the hydrogen consumption and the oil degassing expense reach a minimum. The system can be used for all two pole and four pole turbo generators. A further advantage of the system is that it is very suitable for repowering of existing sealing systems.

According to an embodiment of the proposed sealing arrangement, the first side is the air side of the sealing arrangement and the second side is the gas side, preferably exposed to hydrogen pressure and the interior side of the generator, and preferably the gas side seal ring is provided with a gas side sealing oil return channel. Equivalently, the first side can be the air side of the sealing arrangement and the second side can be the gas side, preferably exposed to hydrogen pressure and the interior side of the generator, and the air side seal ring can be provided with a air side sealing oil return channel. Preferably both of the pair of the seal rings are provided with sealing oil return channels.

According to a further embodiment of the present invention, the sealing oil channel and/or the gas side sealing oil return channel and/or the air side sealing oil return channel are annular ring channels enclosing the shaft completely around the circumference thereof. This provides a continuous sealing oil film delivery to the shaft and return without interruptions. Of course the annular ring channels and/or the sealing oil channels may be provided with distance holders and the like, but preferably at least close to and at the exits to the shaft, these channels are circumferentially surrounding the shaft.

Preferably the axial distance between the sealing oil supply channel and the sealing oil return channel is at least 25 %, preferably at least 30%, most preferably in the range of 40-90% or 40-75% of the total axial width of the corresponding seal ring. In other words: It is preferred that the axial travelling length of the sealing oil from the sealing oil supply channel exit in one or the two opposite directions in the region where the seal rings enclose the shaft prior to their collection by the sealing oil return channel is as long as possible for a high sealing effect. Preferably the axial distance correspondingly between the first/second side of the sealing arrangement and the sealing oil return channel is at least 20%, preferably at least 25 %, most preferably in the range of 25-60% of the total axial width of the corresponding seal ring.

According to a further preferred embodiment of the proposed sealing arrangement means are provided such that the pressure in the clearance at the entry of the sealing oil return channel is lower than the pressure at the exit of the sealing oil supply channel but higher than the pressure at the corresponding side of the sealing arrangement. These means can be provided for example as pressure equalising control valves, as differential pressure control valves and/or as control means for the pump which pumps the sealing oil into the sealing oil channel. Preferably the pressure at the entry of the sealing oil return channel is lower than the pressure at the exit of the sealing oil supply channel by at least 50%, preferably at least 75% of the total pressure difference between the pressure at the exit of the sealing oil channel and the corresponding side.

The sealing oil can be collected on the first side as well as on the second side by corresponding collection elements/piping/tanks and can be essentially completely reintroduced into the sealing oil supply system. Furthermore means can be provided by which the sealing oil collected in the sealing oil return channel(s) is essentially completely reintroduced into the sealing oil supply system.

According to a further preferred embodiment, a degassing unit is provided, in which the collected sealing oil is degassed prior to its reintroduction into the sealing oil supply channel.

A further preferred embodiment is **characterised in that** the sealing oil is fed to the sealing oil channel via at least two radial oil supply pipes provided in or at a housing of the sealing arrangement, and in that at least two return types are provided for each sealing oil return channel in or at a housing of the sealing arrangement.

A still further preferred embodiment is **characterised in that** immediately upstream of the sealing oil channel there is provided a preferably annular distribution chamber for oil supply which preferably circumferentially encloses the annular seal rings.

According to a more specific and preferred embodiment of the proposed sealing arrangement this is **characterised in that** at least one pump is provided which pumps the sealing oil into the sealing oil supply channel, and in that means are provided, preferably in the form of at least one differential pressure control valve and/or of pump control means, adjusting the pressure difference between the gas side and the pressure at the exit of the corresponding sealing oil return channel to be as low as possible, preferably to be smaller than 20%, most preferably smaller than 10% of the total pressure difference between pressures at the exit of the sealing oil supply channel and the gas side, respectively.

The first side is typically the air side of the sealing arrangement and the second side is typically the gas side, exposed to hydrogen pressure and the interior side of the generator. The gas side seal ring is typically provided with a gas side sealing oil return channel, the air side seal ring is preferably provided with a air side sealing oil return channel, and sealing oil collected on the first side as well as on the second side is preferably essentially completely collected, degassed and reintroduced into the sealing oil supply system by corresponding elements, and the sealing oil collected in the sealing oil return channel(s) is preferentially essentially completely reintroduced into the sealing oil supply system after degassing.

The present invention furthermore relates to the use of at least one, preferably of two sealing arrangements as described above for sealing a hydrogen cooled generator shaft on the driving end and/or on the non-driving end. In case of two sealing arrangements used for one generator preferably the supply and collection system is at least partly common to the two sealing arrangements (in particular tanks, degassing elements, pumps etc.).

Furthermore the present invention relates to a method for operating a sealing system using a sealing arrangement as described above. Preferably the method is **characterised in that** the pressure in the clearance at the entry of the sealing oil return channel is controlled to be lower than the pressure at the exit of the sealing oil supply channel but higher than the pressure at the corresponding side of the sealing arrangement, wherein preferably the pressure at the entry of the sealing oil return channel is controlled to be lower than the pressure at the exit of the sealing oil supply channel by at least 50%, preferably at least 75% of the total pressure difference between the pressure at the exit of the sealing oil channel and the corresponding side.

According to a specific embodiment of this method, the sealing oil is pumped into the sealing oil supply channel, and the pressure difference between the gas side and the pressure at the exit of the corresponding sealing oil return channel is controlled to be as low as possible, preferably to be smaller than 20%, most preferably smaller than 10% of the total pressure difference between pressures at the exit of the sealing oil channel and the gas side, respectively.

Further embodiments of the present invention are outlined in the dependent claims.

### SHORT DESCRIPTION OF THE FIGURES

In the accompanying drawings preferred embodiments of the invention are shown in which:
- Figure 1: shows different schematic views (axial cuts) through sealing systems according to the state-of-the-art, wherein in a) a single circuit system, in b) a double circuit system and in c) a triple circuit system are displayed, wherein on the bottom in each case the corresponding pressure profile in an axial direction is given;
- Figure 2: shows a schematic axial cut through a sealing system according to the invention, wherein again on the bottom the pressure profile in an axial direction is given;
- Figure 3: shows a detailed axial cut through a seal ring arrangement suitable for the present invention;
- Figure 4: shows how a seal ring arrangement according to figure 3 is located in the housing of the sealing arrangement and how the piping is arranged therein;
- Figure 5: shows a connectivity diagram for a hydrogen cooled turbo generator equipped with a single circuit sealing arrangement at both ends; and
- Figure 6: shows a connectivity diagram for a hydrogen cooled turbo generator equipped with a sealing arrangement according to the invention at both ends.

### DETAILED DESCRIPTION OF THE PREFERRED EMBODIMENTS

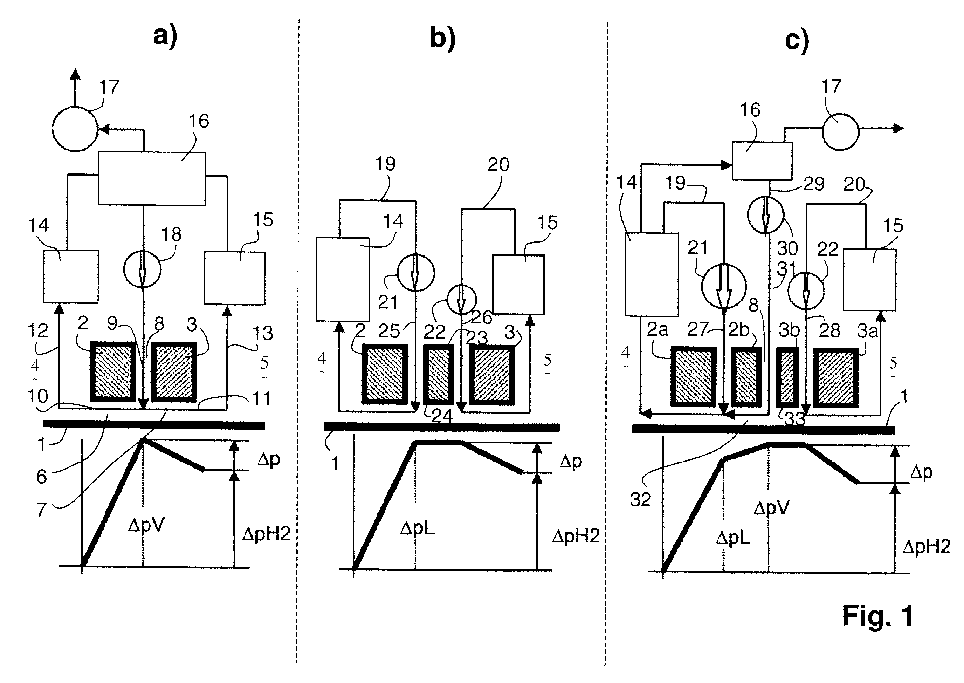

Referring to the drawings, which are for the purpose of illustrating the present preferred embodiments of the invention and not for the purpose of limiting the invention, figure 1 shows conventional sealing systems and shall be used to illustrate the general context of the present invention.

In figure 1a) a so-called single circuit sealing arrangement is displayed in a schematic view (axial cut in one radial section only). The shaft 1 is enclosed by two seal rings 2, 3. One of these seal rings is facing the air side 4, i.e. the outside of the generator housing, and the other seal ring 3 is facing the inner side of the generator, the so-called gas side 5 where the hydrogen gas is present for cooling of the hot parts of the generator.

Between these two rings 2, 3 there is a circumferential gap which forms the sealing oil supply channel through which a sealing oil flow 9 enters in a radial direction towards the shaft 1, and then due to the pressure which is higher than the pressure on the gas side as well as on the air side, flows in both directions 10, 11 through the clearance 6, 7 thereby forming a sealing film enclosing the shaft around its circumference. The sealing oil is forced into this sealing oil channel 8 by means of a sealing oil pump 18 which is, as mentioned above, either directly controlled to provide a pressure at the exit of the sealing oil channel towards the shaft which is sufficiently above the pressure of the hydrogen gas on the gas side, or which provides a higher pressure which is downstream thereof controlled, e.g. by means of control valves, to such a pressure.

In such a single circuit system on both sides, i.e. on the air side 4 as well as on the gas side 5, the sealing oil leaving the clearance 6, 7 is recollected as indicated by the arrows 12 and 13. Normally there are provided collection tanks, an air side oil tank 14 and a gas side oil tank 15 for buffering the oil flow in the system. The sealing oil is then introduced into a degassing unit, in this case a vacuum oil tank, which itself is connected to a vacuum pump 17. Hydrogen gas or any other gas dissolved in the sealing oil is removed from the sealing oil in this unit. This vacuum oil tank 16 is connected to the above mentioned sealing oil pump 18, so in this single circuit system there is an essentially full recirculation of the sealing oil wherein there is one introduction path of sealing oil into the sealing system and two parts for recirculation. In this specific example only one pump 18 is illustrated, it is however possible and for redundancy even advisable, to have at least a stand-by pump and an emergency pump.

As illustrated on the bottom of figure 1a) the pressure at the exit of the sealing oil supply channel 8 must be higher by an amount Δp than the hydrogen pressure in the inside of the generator, so typically substantially above the air side pressure level.

In figure 1b) a so-called double circuit system is illustrated. In this case there is a so-called air side circuit 19 and a gas side circuit 20, and there is provided two oil supply channels through which sealing oil is delivered to the clearance between the shaft 1 and the sealing arrangement. There is one first sealing oil flow of the air side circuit which is delivered to the clearance and then essentially only flows towards the air side where it is again collected for reintroduction by means of the air side pump 21. The second circuit 20 which is independent from the first circuit delivers sealing oil by means of a second supply channel through which a sealing oil flow 26 of the gas side circuit flows, penetrates towards in the opposite direction towards the gas side 5 and is collected on the gas side and re-circled to the gas side circuit pump 22.

The idea behind such a system is that the air side circuit should ideally be completely decoupled from the gas side circuit 20, which would eliminate the need for degassing as the air side circuit would essentially be saturated by the air and the gas side circuit would essentially be saturated by hydrogen, and no mixing would take place. This is possible, if in the clearance 24 between the central sealing ring and the shaft there is truly no flow or mixing of the two sealing oil circuits, which however in practice is not realistic. Therefore these systems are not satisfactorily fulfilling the main requirements for such sealing systems which are to have a low hydrogen consumption and a high hydrogen purity. Indeed the hydrogen purity is decaying in the course of time which increases ventilation and friction losses. Therefore the supply of fresh hydrogen is necessary in order to reach the required purity.

A so-called triple circuit system is illustrated in figure 1c). In this system the two circuits according to the double circuit system as illustrated in figure 1b) are supplemented by a third circuit which is "attached" to the air side circuit. In the centre region of the sealing arrangement there is provided again the central sealing oil supply channel 8 through which a central degassed sealing oil flow 31 flows into the clearance. This central degassed sealing oil flow is pushed into the clearance by means of the pump 30 for the degassed oil circuit, and this pump is supplied with degassed oil 29, which is degassed in a vacuum oil tank 16. The pressure levels in such a system are adjusted such that this central degassed sealing oil flow 31 is diverted towards the air side in the clearance 32 and joins the air side sealing film in the clearance built up by the sealing oil flow 27 of the air side circuit.

The sealing oil collected from the two systems is then again stored in an air side oil tank 14 and one part of this oil is used in the air side circuit 19 and the second part is directed to the above-mentioned degassing unit 16 and supplied to the pump 30 from the degassed oil circuit.

Under normal operating conditions, i.e. if all pumps are in service, such a triple circuit shaft seal fulfils all the necessary requirements for shaft sealing systems of hydrogen cooled generators, it is however problematic due to its complexity and it is rather sensitive to faults of any of the pumps which are involved. Additionally there is a pronounced sensitivity against solid particles of dirt within the non through flown clearances 33 which can lead to a jam of particles between the ring and the shaft leading to high local temperature, shaft material deposits on the ring and its hardening, the ring may serve as a cutting tool leading to the well-known consequences and necessitating a high degree of maintenance. Additionally a high oil temperature because of very small heat convection can be reached leading to an increased oil ageing.

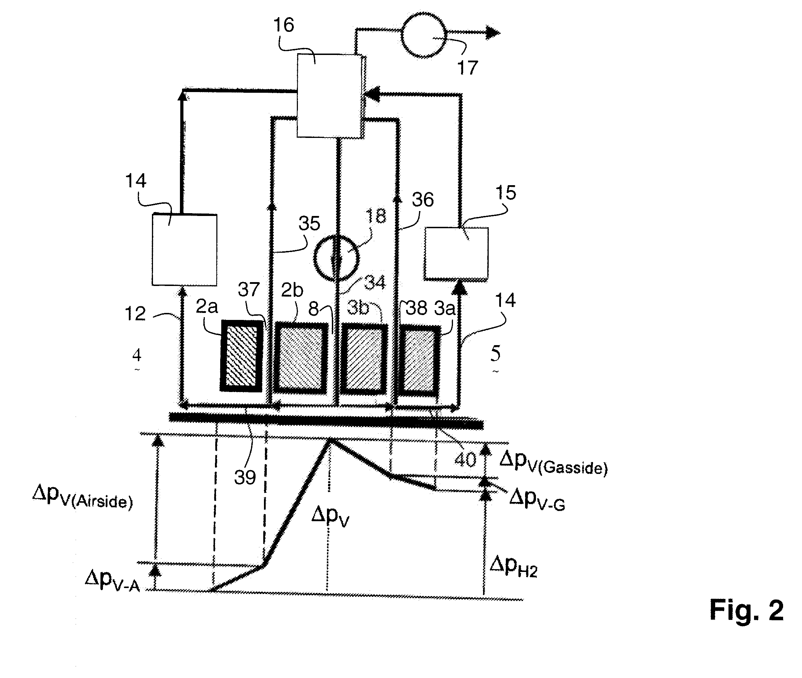

These problems are solved by the system according to the invention which is illustrated in figure 2. In this case the air side seal ring 2 as well as the gas side seal ring 3 are both provided with degassed oil return channels 37 and 38. These channels are supplemented to a single circuit system as illustrated in figure 1a) and lead to a recirculation of sealing oil according to arrows 35 and 36 after the sealing oil has travelled through the corresponding clearances. The sealing oil recollected through the degassed oil return channels 37 and 38 is, as are the sealing oil collects from the air side 4 and from the gas side 5, introduced into a degassing unit, which in this case is again a vacuum oil tank 16. From this vacuum oil tank 16 only one single flow of sealing oil is introduced into the sealing arrangement by means of pump 18 which forces the degassed oil supply 34 into the sealing oil channel 8 which is provided between the two seal rings 2, 3.

It should be noted that the two seal rings 2, 3 can either be provided with channels 37, 38, it is however also possible to have four seal rings.

On the bottom of figure 2 the pressure profile in an axial direction is illustrated for the arrangement according to the invention. As already outlined above, it is desirable to have a little pressure difference between the degassed oil return channels on each side and the corresponding side, i.e. the air side 4 and the gas side 5. Correspondingly the values of Δp_{V-A} and Δp_{V-G} should be as small as possible leading to only a residual flow 39, 40 towards the air side 4 and the gas side 5, respectively. Indeed adjusting the pressures in this way, either by correspondingly controlling pump 18 and/or by providing corresponding valves, for example differential pressure control valves or pressure equalizing control valves, the hydrogen consumption and the oil degassing expenses can be minimized.

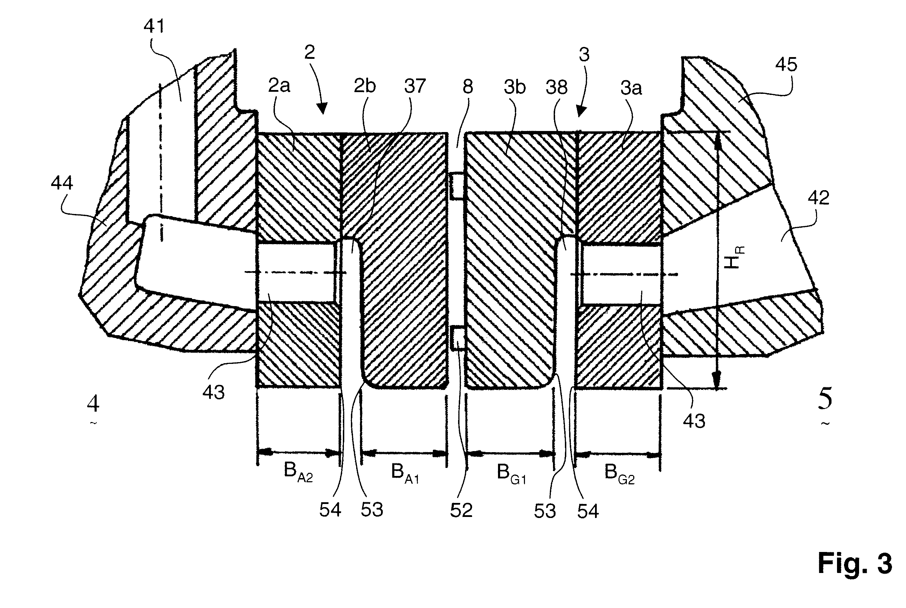

One specific design of a pair of seal rings 2, 3 is illustrated in an axial cut in more detail in figure 3. As one can see the actual seal rings 2 and 3 are located in the housing parts 44, 45 on the air side and on the gas side respectively. As indicated initially, these seal rings are normally prevented from rotation in this housing 44, 45 but can be travelling with the movements of the shaft in radial direction. In this arrangement between the two rings 2, 3 there is provided the actual sealing oil supply channel 8 and the distance of this sealing oil channel in an axial direction is normally adjusted/maintained by distance holders 52 which are indicated by rectangles.

The two degassed oil return channels 37 and 38 are provided as circular grooves which do not penetrate the rings completely in a radial direction, but which are connected by means of axial sections 43 to corresponding piping 41/42 for allowing the sealing oil to flow out of the degassed oil return channels 37, 38. In order to have a flow of sealing oil through the channels 37 and 38 in as high a fraction as possible, it is advantageous to have on the side towards the centre rounded edges 53 while to the corresponding opposite side sharp edges 54. By this corresponding shaping as much of the sealing oil film as possible is diverted from the axial direction into a radial direction and into channels 37 and 38 respectively. As concerns the dimensioning of such a structure it is noted that for a typical setup the outer axial clearance length B_{A2} is typically 10 millimetres, and on the gas side it is typically B_{G2} in the range of 8 to 10 millimetres. The inner axial clearance length are typically B_{A1} in a range of 10 to 12 millimetres and B_{G1} in a range of 10 millimetres. A typical height H_{R} is in the range of 20 to 40 millimetres, preferably in the range of 28 to 32 millimetres.

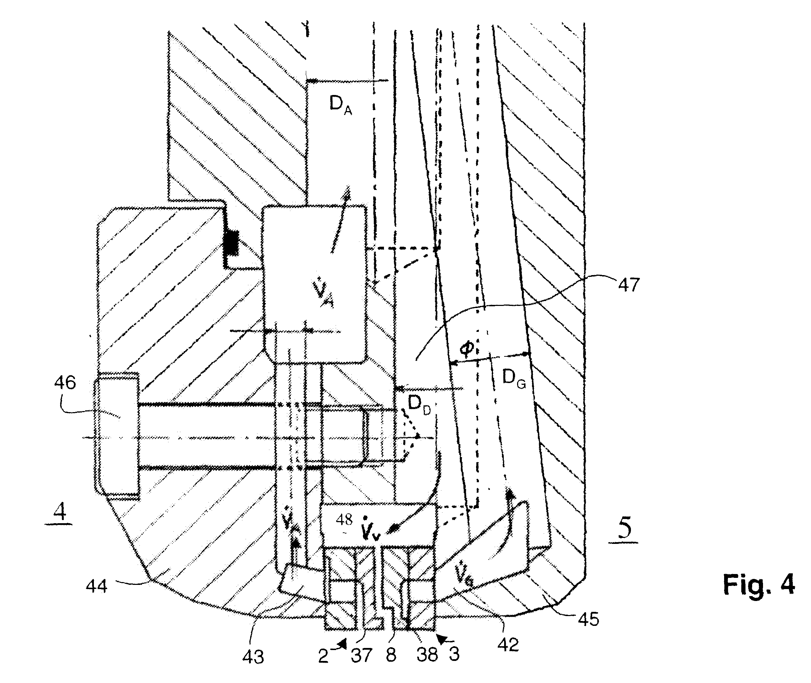

In figure 4 the sealing arrangement including more of the housing parts 44 and 45 is shown. In particular in this view the piping leading to and away from the sealing arrangement is illustrated in more detail. It is noted that in order to be able to operate such a system it is important to have a sufficient cross section for the piping which feeds the sealing oil channel. To this end normally the diameter D_{D} of degassed oil supplied piping must be sufficiently large, normally a diameter of approximately 50 millimetres, if two supply pipes are used in one ring, is sufficient. The diameters of the corresponding piping for the return of degassed oil 42, 43 should be in the range of half of this diameter if the same number of piping is used for returning the degassed oil, i.e. if two pipes 43 are used and two pipes 42.

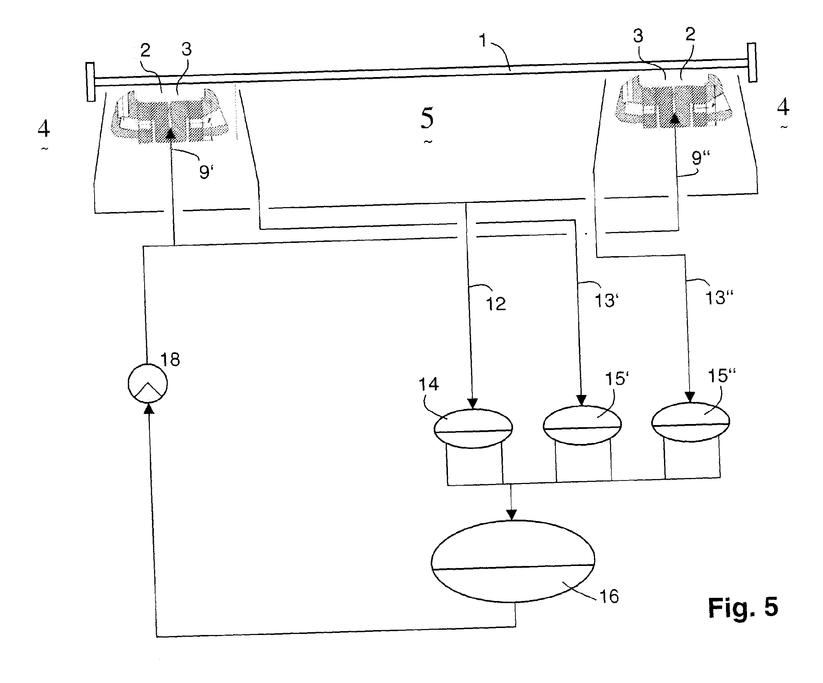

In figure 5 the connectivity of a corresponding arrangement in case of a single circuit system is shown. One can see that the collection from the air side is typically grouped and joined in path 12 to one single air side oil tank 14. On the other hand the collection on the gas side, which is typically more loaded with hydrogen, is collected individually along paths 13' and 13" and to individual tanks 15' and 15". This is due to even local small pressure differences between the paths 13' and 13" inside the generator. Either the tanks 14 as well as 15' and 15" can be degassing units, or there can be, as illustrated in figure 5, a central degassing unit 16 into which the output of the units 14 and 15 is fed. Degassed sealing oil is then pumped via pump 18 to the sealing oil supply channel 8 along path way 9' and 9".

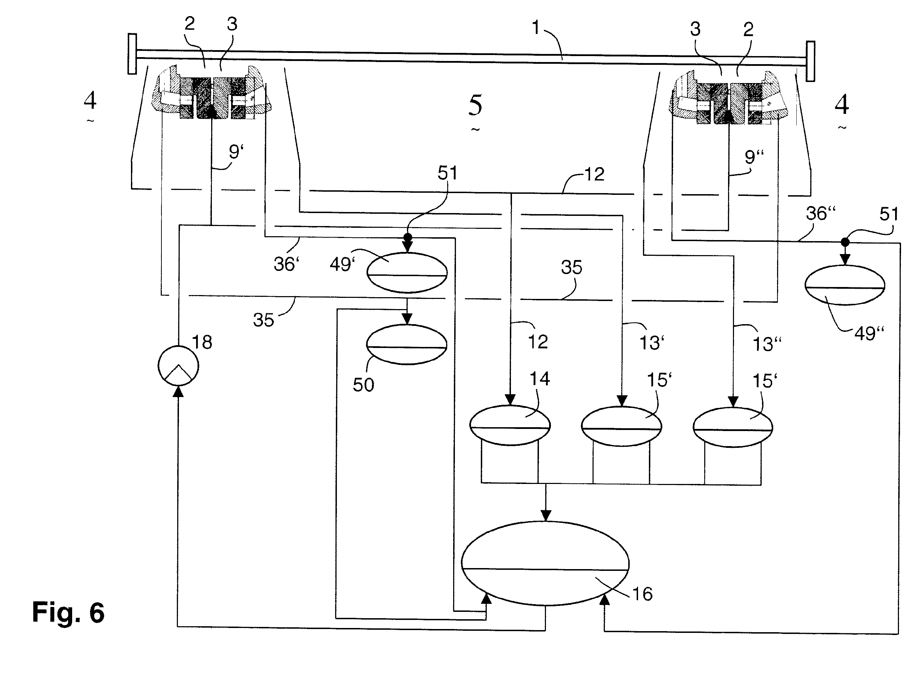

The corresponding connectivity for a system according to the invention is illustrated in figure 6. Here one can see that in addition to the pathways illustrated in figure 5 there are provided return pathways 35 and 36 for sealing oil exiting the system at the degassed oil return channels 37 and 38. Indeed the degassed oil return channels on the air side are again collected along path 35 and into one single tank 50, while the sealing oil collected on the gas side is individually collected along paths 36' and 36" and collected in the individual tanks 49' and 49". By means of corresponding valves 51 these tanks are pressure controlled and the output of the tanks 49' and 49" is entered into the degassing unit 16. Also the output of tank 50 enters degassing unit 16, and again the output of degassing unit is used to feet pump 18 and thereby the sealing oil channels 8.

### LIST OF REFERENCE NUMERALS

- 1: shaft
- 2: air side seal ring
- 2a: air side part of air side seal ring
- 2b: central part of air seal ring
- 3: gas side seal ring
- 3a: gas side part of gas side seal ring
- 3b: central part of gas side seal ring
- 4: air side
- 5: gas side
- 6: clearance between air side seal ring and shaft
- 7: clearance between gas side seal ring and shaft
- 8: sealing oil supply channel
- 9: sealing oil flow through 8
- 10: sealing oil flow through 6
- 11: sealing oil flow through 7
- 12: sealing oil collection on air side
- 13: sealing oil collection on gas side
- 14: air side oil tank
- 15: gas side oil tank
- 16: vacuum oil tank
- 17: vacuum pump
- 18: sealing oil pump
- 19: air side circuit
- 20: gas side circuit
- 21: air side circuit pump
- 22: gas side circuit pump
- 23: central sealing ring
- 24: clearance between central sealing ring and shaft
- 25: sealing oil flow of air side circuit between air side seal ring and Central sealing ring
- 26: sealing oil flow of gas side circuit between gas side seal ring and Central sealing ring
- 27: sealing oil flow of air side circuit between the two parts of the air side seal ring
- 28: sealing oil flow of gas side circuit between the two parts of the gas side seal ring
- 29: degassed oil circuit
- 30: pump for degassed oil circuit
- 31: central degassed sealing oil flow through central sealing oil supply channel
- 32: clearance between central part of air seal ring and shaft
- 33: clearance between central part of gas seal ring and shaft
- 34: degassed oil supply
- 35: degassed oil return on air side

- 36: degassed oil return on gas side
- 37: degassed oil return channel on air side
- 38: degassed oil return channel on gas side
- 39: residual flow of degassed oil in clearance on air side
- 40: residual flow of degassed oil in clearance on gas side
- 41: degassed oil return piping on air side
- 42: degassed oil return piping on gas side
- 43: axial sections of 41/42
- 44: air side seal housing
- 45: gas side seal housing
- 46: screw
- 47: degassed oil supply piping
- 48: distribution chamber for degassed oil supply
- 49: return gas side oil tank
- 50: return air side oil tank
- 51: valve
- 52: distance holders
- 53: rounded edge
- 54: sharp edge

- Δp_{H2}: pressure difference between air side and gas side
- Δp_{V}: pressure difference between air side pressure and sealing oil pressure at exit of sealing oil supply channel
- Δp: pressure difference between gas side pressure and sealing oil pressure at exit of sealing oil supply channel
- Δp_{L}: pressure difference between air side pressure and Central sealing ring region pressure
- Δp_{V-A}: pressure difference between air side pressure and degassed oil return channel entry on air side
- ΔP_{V(air side)}: pressure difference between degassed oil return channel entry on air side pressure and sealing oil pressure at exit of sealing oil supply channel
- Δp_{V(Gasside)}: pressure difference between degassed oil return channel entry on gas side pressure and sealing oil pressure at exit of sealing oil supply channel
- Δp_{V-G}: pressure difference between gas side pressure and degassed oil return channel entry on gas side pressure
- B_{A2}: air side outer axial clearance length
- B_{G2}: gas side outer axial clearance length
- B_{A1}: air side inner axial clearance length
- B_{G1}: gas side inner axial clearance length
- H_{R}: height of seal ring
- D_{G}: diameter of degassed oil return piping on gas side
- D_{A}: diameter of degassed oil return piping on air side
- D_{D}: diameter of degassed oil supply piping

## Claims

1. Shaft sealing arrangement comprising at least two seal rings (2, 3) with a sealing oil supply channel (8) between, wherein the seal rings (2, 3) are radially enclosing a rotating shaft (1) with a clearance (6, 7), and wherein a pump (18) is provided for pumping sealing oil (34) through the sealing oil supply channel (8) in a radial direction towards the shaft (1) and wherein this sealing oil subsequently flows through said clearance (6, 7) in two opposite axial directions and is collected on a first side (4) as well as on a second side (5) of the shaft sealing arrangement and at least partially reintroduced into the sealing oil supply system,
wherein on at least one side (4, 5) the corresponding seal ring (2, 3) is provided with a sealing oil return channel (37, 38), through which at least a fraction of the sealing oil flowing in the corresponding clearance (6, 7) exits said clearance (6, 7) in a radial direction, and is at least partially collected and reintroduced into the sealing oil supply system (16, 18).

2. Sealing arrangement according to claim 1, wherein the first side (4) is the air side of the sealing arrangement and the second side (5) is the gas side, preferably exposed to hydrogen pressure and the interior side of a generator, and wherein the gas side seal ring (3) is provided with a gas side sealing oil return channel (38).

3. Sealing arrangement according to any of the preceding claims, wherein the first side (4) is the air side of the sealing arrangement and the second side (5) is the gas side, preferably exposed to hydrogen pressure and the interior side of a generator, and wherein the air side seal ring (2) is provided with an air side sealing oil return channel (37).

4. Sealing arrangement according to any of the preceding claims, wherein the sealing oil supply channel (8) and/or the gas side sealing oil return channel (38) and/or the air side sealing oil return channel (37) are annular ring channels enclosing the shaft (1) completely around the circumference thereof.

5. Sealing arrangement according to any of the preceding claims, wherein the axial distance (B_{A1},B_{G1}) between the sealing oil channel (8) and the sealing oil return channel (37, 38) is at least 25 %, preferably at least 30%, most preferably in the range of 40-75% of the total axial width of the corresponding seal ring (2, 3) and/or wherein the axial distance (B_{A2},B_{G2}) between the first/second side (4, 5) of the sealing arrangement and the sealing oil return channel (37, 38) is at least 20%, preferably at least 25 %, most preferably in the range of 25-60% of the total axial width of the corresponding seal ring (2, 3).

6. Sealing arrangement according to any of the preceding claims, wherein means are provided such that the pressure in the clearance (6, 7) at the entry of the sealing oil return channel (37, 38) is lower than the pressure at the exit of the sealing oil supply channel (8) but higher than the pressure at the corresponding side (4, 5) of the sealing arrangement, wherein preferably the pressure at the entry of the sealing oil return channel is lower than the pressure at the exit of the sealing oil supply channel (8) by at least 50%, preferably at least 75% of the total pressure difference (Δp_{V}) between the pressure at the exit of the sealing oil channel (8) and the corresponding side (4, 5).

7. Sealing arrangement according to any of the preceding claims, wherein sealing oil (12, 14) collected on the first side (4) as well as on the second side (5) is essentially completely reintroduced into the sealing oil supply system (16, 18), and wherein the sealing oil (35, 36) collected in the sealing oil return channel(s) (37, 38) is essentially completely reintroduced into the sealing oil supply system (16, 18).

8. Sealing arrangement according to any of the preceding claims, wherein it comprises a degassing unit (16) in which collected sealing oil (12, 14, 35, 36) is degassed prior to its reintroduction into the sealing oil channel (8).

9. Sealing arrangement according to any of the preceding claims, wherein the sealing oil is fed to the sealing oil supply channel (8) via at least two radial oil supply pipes (47) provided in or at a housing (44, 45) of the sealing arrangement, and wherein at least two return pipes (41, 42) are provided for each sealing oil return channel (37, 38) in or at a housing (44, 45) of the sealing arrangement.

10. Sealing arrangement according to any of the preceding claims, wherein immediately upstream of the sealing oil channel (8) there is provided a preferably annular distribution chamber (48) for oil supply which preferably circumferentially encloses the annular seal rings (2, 3).

11. Sealing arrangement according to any of the preceding claims, wherein at least one pump (18) is provided which pumps the sealing oil (34) into the sealing oil channel (8), and wherein means are provided, preferably in the form of at least one differential pressure control valve and/or of pump control means, adjusting the pressure difference between the gas side (5) and the pressure at the exit of the corresponding sealing oil return channel (38) to be as low as possible, preferably to be smaller than 20%, most preferably smaller than 10% of the total pressure difference between pressures at the exit of the sealing oil supply channel (8) and the gas side (5), respectively.

12. Sealing arrangement according to any of the preceding claims, wherein the first side (4) is the air side of the sealing arrangement and the second side (5) is the gas side, exposed to hydrogen pressure and the interior side of the generator, wherein the gas side seal ring (3) is provided with a gas side sealing oil return channel (38), wherein the air side seal ring (2) is provided with a air side sealing oil return channel (37), and wherein sealing oil (12, 14) collected on the first side (4) as well as on the second side (5) is essentially completely collected, to be degassed and reintroduced into the sealing oil supply system, and wherein the sealing oil (35, 36) collected in the sealing oil return channel(s) (37, 38) is essentially completely reintroduced into the sealing oil supply system after degassing.

13. Use of at least one, preferably of two sealing arrangement according to any of the preceding claims for sealing a hydrogen cooled generator shaft (1) on the driving end and/or on the non-driving end, wherein preferably the supply and collection system in case of two sealing arrangements is at least partly common to the two sealing arrangements.

14. Method for operating a sealing system using a sealing arrangement according to any of claims 1-12, wherein the pressure in the clearance (6, 7) at the entry of the sealing oil return channel (37, 38) is controlled to be lower than the pressure at the exit of the sealing oil channel (8) but higher than the pressure at the corresponding side (4, 5) of the sealing arrangement, wherein preferably the pressure at the entry of the sealing oil return channel is controlled to be lower than the pressure at the exit of the sealing oil supply channel (8) by at least 50%, preferably at least 75% of the total pressure difference (Δp_{V}) between the pressure at the exit of the sealing oil channel (8) and the corresponding side (4, 5).

15. Method according to claim 14, wherein the sealing oil (34) is pumped into the sealing oil channel (8), and wherein the pressure difference between the gas side (5) and the pressure at the exit of the corresponding sealing oil return channel (38) is controlled to be as low as possible, preferably to be smaller than 20%, most preferably smaller than 10% of the total pressure difference between pressures at the exit of the sealing oil supply channel (8) and the gas side (5), respectively.
